Europäisches Patentamt

(19) European Patent Office

Office européen des brevets

(11) Publication number: **0 246 156**
**A2**

(12) # EUROPEAN PATENT APPLICATION

(21) Application number: **87401075.4**

(22) Date of filing: **13.05.87**

(51) Int. Cl.³: **A 23 L 2/16**
**B 65 D 81/18, B 65 B 63/08**

(30) Priority: **15.05.86 US 863449**

(43) Date of publication of application:
**19.11.87 Bulletin 87/47**

(84) Designated Contracting States:
**BE DE ES FR GB**

(71) Applicant: **THE FRESH JUICE COMPANY, INC.**
**350 Northern Boulevard**
**Great Neck New York 11021(US)**

(72) Inventor: **Smith,Steven**
**5 Lawson Lane**
**Great Neck,New York 11023(US)**

(72) Inventor: **Schafler,Eric**
**4 Willow Lane**
**Great Neck,New York 11023(US)**

(74) Representative: **Bloch, Gérard et al,**
**6, rue du Faubourg Saint-Honoré**
**F-75008 Paris(FR)**

(54) **Frozen juice product.**

(57) A process for producing a frozen whole juice product, in which juice is frozen in plastic containers that have substantially planar faces after freezing.

FIG. 3

EP 0 246 156 A2

The present invention relates to a process for producing a frozen juice product and the frozen juice product thus obtained. The present invention finds particular utility in the production of frozen orange juice.

Orange juice is commercially available in liquid or frozen concentrate form. While freshly squeezed whole orange juice is available to consumers through restaurants and other points of sale where the orange juice is consumed at the point of sale, distribution of orange juice through conventional retail channels of trade, such as supermarkets, groceries and the like, is substantially restriced to the sale of frozen orange juice concentrate or pasteurized liquid orange juice. However, the orange juice in liquid form is itself often prepared from frozen concentrate, and hence all orange juice products commercially available through retail channels of trade do not capture the true taste of fresh whole orange juice.

The present invention provides a process for producing a frozen whole orange juice product that is packaged in a plastic container having substantially planar faces when juice in the container has been frozen. Accordingly, the frozen whole orange juice products of the present invention can be displayed for sale in the retail store side-by-side without loss of valuable shelf space that would be caused by outward bulging of the filled plastic container sufficient to distort the bottle so that it would lose its square cross section.

In particular, the process of the present invention produces a frozen whole orange juice product as follows.

First, several empty elongated plastic bottles are provided, each having a bottom wall, an elongated side wall and a top wall integrally formed as a single piece from plastic, as by blow-molding. The side wall includes means for controlling the outward bulging thereof upon freezing orange juice in the bottle thereby providing the side wall with substantially planar faces after orange juice in the bottle has been frozen. The bottle also includes an opening in the top wall of the bottle to permit the bottle to be filled and emptied.

The process of the present invention includes precooling fresh whole juice to about 30°F, filling the empty plastic bottles through the openings thereof with the precooled orange juice, closing the openings of each bottle filled with the juice, and rapidly freezing the juice therein to solid form.

The consumer purchases the orange juice product in frozen form and permits the orange juice to defrost in the refrigerator, after which fresh orange juice is available having the taste and nutritional content of freshly squeezed whole orange juice. The orange juice product of the present invention is thus seen to be clearly superior to the juice products conventionally sold in retail channels of trade.

The present invention is illustrated in terms of its preferred embodiment in the accompanying drawings, in which :

Fig. 1 is a block diagram of the process used in the present invention;

Fig. 2 is an elevational view, partly in section, of the frozen juice product in accordance with the present invention;

Fig. 3 is a view, in section, taken along lines 3-3 in Fig. 2; and

Fig. 4 is a diagrammatic view, in section, similar to Fig. 2 of an alternative embodiment of the present invention.

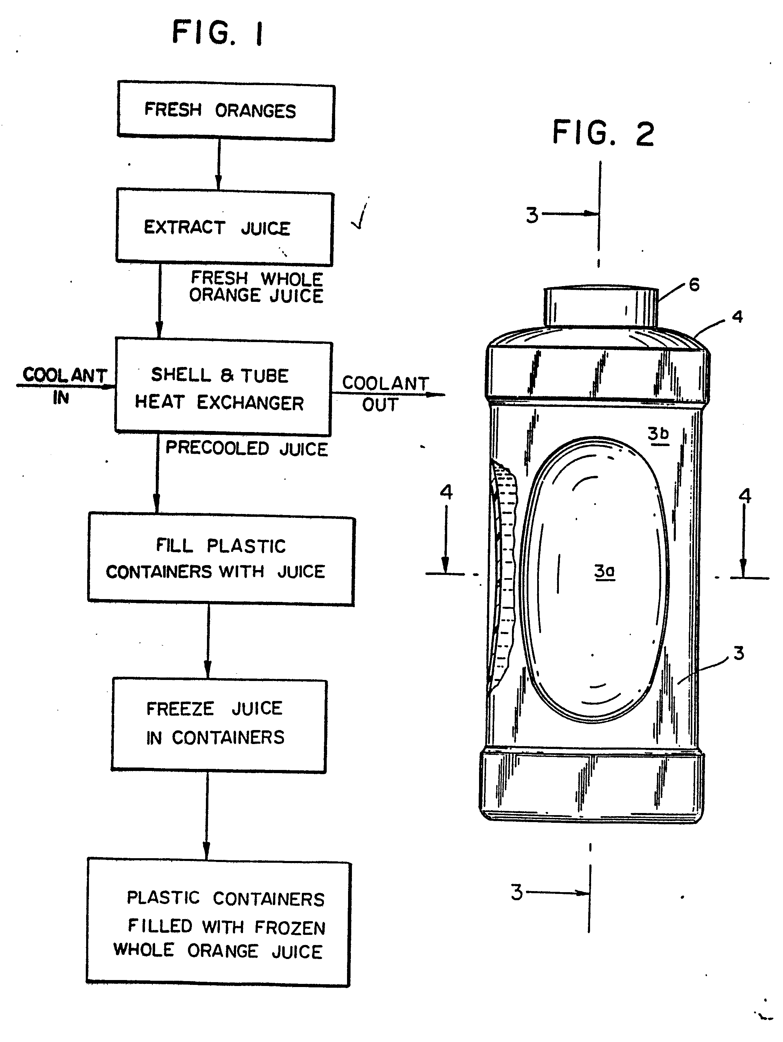

With reference to Fig. 1, the present invention involves extracting juice from fresh oranges to provide fresh whole orange juice. The fresh whole orange juice is then passed through tubes, such as the tubes of a shell and tube heat exchanger, and cooled with a coolant to a temperature above the freezing point. The precooled juice is dispensed into plastic containers to be described in detail hereinafter, which are then exposed to a refrigerant to freeze the juice to solid form. Plastic containers filled with frozen whole orange juice are thus obtained as the product of the present invention.

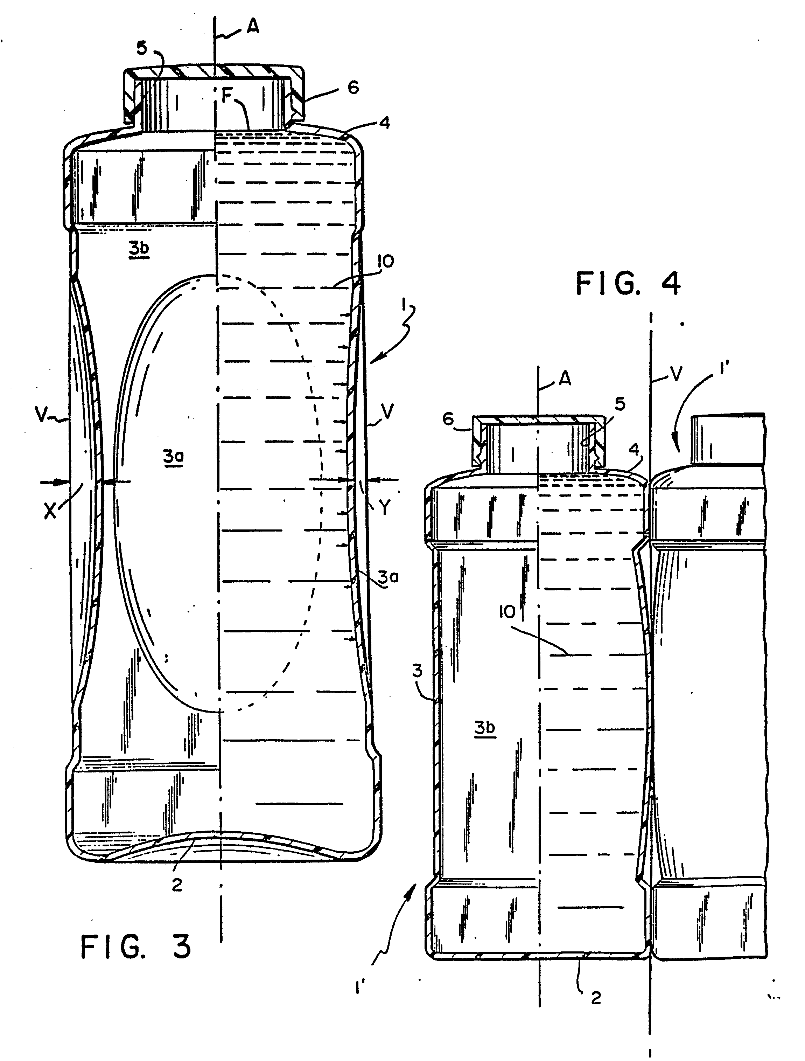

Fig. 2 illustrates a plastic container 1 used in the process of the present invention. The bottle 1 has a bottom wall 2, a side wall 3 and a top wall 4 formed as a single piece from a plastic material by any conventional means, such as blow-molding. The top wall 4 is provided with an open neck 5 (Fig. 3), which is closed by the closure 6. Closure 6 is fastened to bottle 1 by any suitable means, such as screw threading (not shown).

Side wall 3 has a substantially square cross-section when the bottle is empty taken perpendicular to the longitudinal axis A (Fig. 3) of bottle 1. Side wall 3 thus provides four substantially planar faces 3b, each provided with a concave area 3a that bulges inwardly of the bottle 1.

Fig. 3 shows the bottle 1 both empty and filled. Thus, the portion of bottle 1 to the left of axis A as viewed in Fig. 3 shows the empty bottle 1, whereas the portion of Fig. 3 to the right of axis A shows the bottle 1 filled with frozen whole orange juice 10. For purposes of illustration, the inwardly bulged areas 3a are drawn with an exaggerated degree of bulging. As formed, bottle 1 is molded such that the center of each inwardly bulging area is displaced from the vertical plane V of the planar face 3b by a distance x such that the four inwardly bulged areas 3a are effective to limit the outward bulging of the side wall 3 upon the freezing of the juice 10 during the rapid freezing step of the process of the present invention. As seen in the right-hand side of Fig. 3, after the freezing step, the frozen juice 10 expands and causes the inwardly bulging area 3a to be displaced from its original position such that it is now only a smaller distance y from the vertical plane V of planar face 3b. Ideally, the dimension y will be substantially zero, but in practice y may be up to about 1/16 inch to the left or right of the plane V as viewed in Fig. 3. To accomplish this, the center of the concave inwardly bulged areas 3a will be provided with a dimension x in the range of from about 1/8 to about 3/16 inches for a wall thickness of the side wall 3 from about 0.015 to about 0.018 inches. It is presently preferred to make bottle 1 of a size sufficient to contain one liter of frozen whole orange juice, and this can be readily provided with a bottle that is approximately 8 to 9 inches high with a cross section taken along the longitudinal axis of the bottle of approximately three to three and three-quarter inches square.

It is important to provide sufficient empty space above the precooled orange juice to accommodate expansion of the juice upon freezing thereof. It is presently preferred that the fill line of the precooled juice will be below the top wall 4 so that the juice when frozen will be at position F (Fig. 3), namely at the intersection of the neck 5 and top wall 4, or slightly below position F. For the one liter bottle described above, the fill line of the precooled juice is desirably about 3/8 to about 5/8 inch below position F.

The process of the present invention is operated as follows. Whole orange juice is extracted from fresh oranges by any conventional means and the fresh whole orange juice is cooled by passing it by gravity feed through vertical tubes of approximately 3/4 inches in diameter and 20 feet in length while exposed to ammonia at a temperature from about -20 to about -30°F to obtain orange juice at about 30°F. Orange juice freezes at about 27°F and it is usually suitable to precool the juice to within about 5°F. of its freezing point. Bottles 1 are then filled with the precooled juice using any conventional liquid-filling apparatus (not shown). Bottles 1 filled with the juice are closed with closure 6 and are exposed to a refrigerant at a suitable temperature, such as from about -30° to about 0°F, to freeze the juice to a solid form. While it is presently preferred to freeze the juice using air at 0°F to obtain frozen juice in about 24 hours, other freezing techniques may be employed, such as the quick freezing techniques used for freezing shrimp, ice cream and other foods, which employ cryogenic refrigerants. In such known techniques, the food to be frozen is conveyed through a tunnel while exposed to a cryogenic refrigerant.

The bottles 1 filled with frozen whole orange juice are then obtained as the product of the present invention. Bottles 1 may be formed from any suitable plastic material, such as food grade, high density polyethylene.

0246156

Fig. 4 illustrates an alternative embodiment of the invention, in which the bottle 1' is identical to the bottle 1 except that the side wall 3 has four planar faces 3b but without the concave inwardly bulged areas 3a. The bottle 1' is shown empty in the left-hand side of Fig. 5 and filled with juice 10 in the right-hand side. The side wall 3 of bottle 1' is sufficiently rigid to resist significant distorsion due to the expansion of juice 10 upon freezing. Any distortion that does occur will be limited by the rigid side wall 3 to maintain the substantially square cross section of bottle 1' taken along longitudinal axis A. As in Fig. 3, the distortion of the side wall 3 after the juice 10 has been frozen has been exaggerated for purposes of illustration, and it can be seen that bottle 1' can be stacked side-by-side with another bottle 1', as illustrated by the portion of the bottle adjacent to the right-hand side of bottle 1' shown in section. Sufficient rigidity for side wall 3 can be accomplished by increasing the wall thickness of the side wall 3 to a wall thickness in the range of from about 0.015 to about 3/16 inches for a one-liter bottle.

It is seen that the present invention provides for a frozen whole orange juice product that is commercially feasible to manufacture and sell through conventional retail channels of trade and thus the advantages of fresh orange juice, both in terms of taste and nutrition, can be provided to the consumers. In order to insure the quality of the frozen juice product according to the present invention, it is preferred that the fresh whole orange juice is subjected to the pre-cooling step as promptly as possible, and generally this will be performed within about one minute after the orange juice is extracted from the fresh oranges.

While the present invention has been described in terms of its preferred embodiment, it is to be understood that the present invention embraces any fruit juice product, such as grapefruit juice, apple juice and the like.

CLAIMS

1. A process for producing a frozen whole-fruit juice product, which comprises :

a. providing a plurality of empty elongated plastic bottles (1;1') each having a bottom wall means (2), an elongated sidewall means (3) providing four substantially planar faces (3b) and a top wall means (4) integrally formed as a single piece from plastic, said sidewall means (3) including means (3a) for controlling the outward bulging of said planar faces (3b) upon freezing fruit juice in said bottle (1;1') and thus provide said sidewall means (3) with substantially planar faces after the juice in said bottle (1;1') has been frozen, said top wall means (4) including an opening (5') therein ;

b. precooling fresh whole juice ;

c. filling said empty plastic bottles (1;1') with said precooled juice ;

d. closing with a closure means (6) each said opening (5) of each said bottle (1;1') filled with said precooled juice ; and

e. further cooling said filled bottles (1;1') to freeze said juice therein to solid form.

2. The process according to claim 1, wherein the fruit juice is orange juice, grapefruit juice or apple juice.

3. The process according to claim 1, wherein the fruit juice is orange juice.

4. The process according to claim 3, wherein the orange juice is precooled to a temperature within 5°F above its freezing point.

5. The process according to claim 1, wherein said means for limiting said outward bulging are concave, inwardly bulging areas (3a) in said substantially planar faces (3b).

6. The process according to claim 5, wherein each of said substantially planar faces (3b) includes a said concave, inwardly bulging area (3a).

7. The process according to claim 5, wherein the fruit juice is orange juice, grapefruit juice or apple juice.

8. The process according to claim 6, wherein the fruit juice is orange juice, grapefruit juice or apple juice.

9. The process according to claim 5, wherein the fruit juice is orange juice.

10. The process according to claim 6, wherein the fruit juice is orange juice.

11. The process according to claim 1, wherein said sidewall means (3) has four said substantially planar faces (3b) and has a substantially square cross-section taken perpendicular to the longitudinal axis of the bottle.

12. The process according to claim 10, wherein said sidewall means (3) has four said substantially planar faces (3b) and has a substantially square cross-section taken perpendicular to the longitudinal axis of the bottle.

1/2

0246156

## FIG. 1

```
┌─────────────────────┐
│   FRESH ORANGES     │
└─────────────────────┘
           │
           ▼
┌─────────────────────┐
│   EXTRACT JUICE     │ ✓
└─────────────────────┘
           │
    FRESH WHOLE
    ORANGE JUICE
           │
           ▼
COOLANT ┌─────────────────────┐ COOLANT
IN ──── │   SHELL & TUBE      │ ──── OUT
        │  HEAT EXCHANGER     │
        └─────────────────────┘
           │
    PRECOOLED JUICE
           │
           ▼
┌─────────────────────┐
│   FILL PLASTIC      │
│ CONTAINERS WITH JUICE│
└─────────────────────┘
           │
           ▼
┌─────────────────────┐
│   FREEZE  JUICE     │
│   IN CONTAINERS     │
└─────────────────────┘
           │
           ▼
┌─────────────────────┐
│  PLASTIC CONTAINERS │
│ FILLED WITH FROZEN  │
│ WHOLE ORANGE JUICE  │
└─────────────────────┘
```

## FIG. 2

0246156

FIG. 3

FIG. 4